(19) Europäisches Patentamt

European Patent Office

Office européen des brevets

(11) **EP 1 133 448 B1**

(12) **EUROPÄISCHE PATENTSCHRIFT**

(45) Veröffentlichungstag und Bekanntmachung des Hinweises auf die Patenterteilung:
**22.01.2003 Patentblatt 2003/04**

(21) Anmeldenummer: **99948929.7**

(22) Anmeldetag: **05.10.1999**

(51) Int Cl.$^7$: **C02F 1/00**, C02F 5/10, G01N 33/18, G05D 21/00, G01N 27/00

(86) Internationale Anmeldenummer:
**PCT/EP99/07360**

(87) Internationale Veröffentlichungsnummer:
**WO 00/021888 (20.04.2000 Gazette 2000/16)**

(54) **VERFAHREN ZUR ERMITTLUNG DER DOSIERMENGEN VON WASSERBEHANDLUNGSPRODUKTEN**

METHOD FOR DETERMINING THE DOSAGES OF WATER TREATMENT PRODUCTS

PROCEDE POUR DETERMINER DES QUANTITES DOSEES DE PRODUITS DE TRAITEMENT DE L'EAU

(84) Benannte Vertragsstaaten:
**AT BE CH CY DE DK ES FI FR GB GR IE IT LI LU MC NL PT SE**

(30) Priorität: **14.10.1998 DE 19847275**

(43) Veröffentlichungstag der Anmeldung:
**19.09.2001 Patentblatt 2001/38**

(73) Patentinhaber: **Henkel Kommanditgesellschaft auf Aktien
40589 Düsseldorf (DE)**

(72) Erfinder:
• **GARTNER, Engelbert
D-65597 Dauborn (DE)**

• **HATER, Wolfgang
D-41564 Kaarst (DE)**

(56) Entgegenhaltungen:
**US-A- 4 464 315      US-A- 4 648 043
US-A- 5 057 229      US-A- 5 576 481
US-A- 5 855 791**

• **PATENT ABSTRACTS OF JAPAN vol. 016, no. 118 (C-0922), 25. März 1992 (1992-03-25) & JP 03 288586 A (KURITA WATER IND LTD), 18. Dezember 1991 (1991-12-18)**

EP 1 133 448 B1

**Beschreibung**

Die Erfindung liegt auf dem Gebiet der Konditionierung von Kühlwasser für wäßrige Kühlsysteme durch Zugabe von Wasserbehandlungsprodukten. Unter Konditionierung wird hierbei vor allem die Verminderung der korrosiven Wirkung der Wasserphase und ihre Stabilisierung gegenüber der Bildung von Niederschlägen, der Ablagerung von Härtebildnern ("scale") und der Bildung biologischer Beläge verstanden. Die Erfindung ist sowohl für offene als auch für geschlossene Kreislaufkühlsysteme geeignet. Sie ist insbesondere für offene Kreislaufkühlsysteme konzipiert. Da bei diesen der Kühleffekt auf der Verdunstung von Wasser beruht, sind sie wegen der damit verbundenen Aufkonzentrierung von Wasserinhaltsstoffen und dem freien Luftzutritt besonders anfällig gegen die Bildung anorganischer und organischer Beläge oder Ablagerungen. Die für die Konditionierung von Kühlwasser eingesetzten Wasserbehandlungsprodukte haben unterschiedliche Aufgaben zu lösen und gehören daher in der Regel unterschiedlichen Stoffklassen an. Wasserbehandlungsprodukte umfassen als wesentliche Komponenten Entschäumer, Härtestabilisatoren. Dispergatoren, Korrosionsinhibitoren und Biozide. Als Härtestabilisatoren sind beispielsweise bekannt: anorganische Polyphosphate, Phosphonsäuren, Aminomethylenphosphonsäuren, Phosphorsäureester, Phosphonocarbonsäuren sowie Polycarbonsäuren, beispielsweise vom Typ der teilverseiften Polyacrylamide oder der Polymere bzw. Copolymere von Acrylsäure und/oder Methacrylsäure. In neuerer Zeit wird verstärkt der Einsatz biologisch abbaubarer Polyaminocarbonsäuren wie beispielsweise Polyasparaginsäuren oder Asparaginsäurehaltige Polymere empfohlen. Polycarbonsäuren können auch die Funktion von Dispergiermitteln ("Dispergatoren") übernehmen, d.h. sie stabilisieren mikrodispers verteilte Feststoffpartikel gegen Sedimentation und Schlammbildung. Außer den bereits genannten teilhydrolysierten Polyacrylamiden und den Polycarbonsäuren bzw. Polyaminocarbonsäuren können als Dispergiermittel eingesetzt werden: Polystyrolsulfonate, Polyvinylsulfonate, quartäre Ammoniumverbindungen, unverseifte Polyacrylamide und Polyalkylenglycole. Als Mikrobizide können Stoffe eingesetzt werden, die auf Mikroorganismen giftig wirken, beispielsweise Isothiazolinderivate, Dibromnitrilopropionamid, Halogenalkylhydantoine, quartäre Ammonium- oder Phosphoniumverbindungen oder deren Derivate. Alternativ setzt man solche Stoffe ein, deren keimtötende Wirkung auf ihrem Oxidationsvermögen beruht. Beispiele solcher oxidativ wirkender Mikrobizide sind Ozon, Chlor, Brom, Chlordioxid, Hypochlorite, Hypobromite oder Wasserstoffperoxid. Einige der zuvor genannten Härtestabilisatoren haben auch eine korrosionsinhibierende Wirkung. Beispielsweise genannt seien: Phosphonsäuren wie beispielsweise 1-Hydroxyethan-1,1-diphosphonsäure oder Aminotrimethylenphosphonsäure, Phosphonocarbonsäuren wie beispielsweise 2-Phosphonobutan-1,2,4-tricarbonsäure. Polycarbonsäuren wie beispielsweise Copolymere der Acrylsäure und Methacrylsäure, Polyacrylate, Copolymere der Acrylsäure und des Acrylsäuremethylesters oder Polyaminosäuren können ebenfalls korrosionsinhibierend wirken. Anorganische Korrosionsinhibitoren sind beispielsweise Zinkionen, Molybdate, Chromate, Silicate, Carbonate, Ortho-, Pyro-, und Polyphosphate, sowie Silicate. In geschlossenen Kühlsystemen können auch Borate, Nitrite oder Benzoate als Korrosionsinhibitoren eingesetzt werden. Die auf die Anwesenheit von Sauerstoff zurückzuführende Korrosion versucht man durch chemische Bindung des Sauerstoffs einzudämmen. Hierzu setzt man Sauerstoffbindemittel wie beispielsweise Sulfite, Hydrazin, Amine (z.B. Diethylhydroxylamin oder andere Hydroxylaminderivate, Arylamine) oder Chinon- oder Hydrochinonderivate ein.

Um solche Wasserbehandlungsprodukte effektiv und wirtschaftlich einzusetzen, müssen ihre Konzentrationen in dem Kreislaufwasser des Kühlkreislaufs in engen Grenzen gehalten werden. Unterschreitet man produktspezifische Mindestkonzentrationen, tritt die technisch erwünschte Wirkung nicht zuverlässig ein und die Leistungsfähigkeit des Kühlkreislaufs wird beispielsweise durch Ablagerungen beeinträchtigt. Zu hohe Konzentrationen an Wasserbehandlungsprodukten führen zu keinem zusätzlichen Nutzeffekt. Sie erhöhen jedoch die Betriebskosten und führen bei Ablassen von Kreislaufwasser in die Umwelt zu einer unnötigen Umweltbelastung mit den Wasserbehandlungsprodukten.

Dieses Dosierproblem stellt sich besonders bei offenen Kühlkreisläufen. Hier wird das Umlaufwasser in Wärmetauschern oder Kondensatoren erwärmt und die zugeführte Wärme im Kühlturm durch Verdunstung eines Teiles des Umlaufwassers wieder entzogen. Dieser Prozeß führt zur Aufkonzentrierung der Wasserinhaltsstoffe. Um deren Konzentration im Kreislaufwasser zu begrenzen, wird ein Teil des Kreislaufwassers aus dem System abgeflutet. Dabei kann die Abflutung automatisch veranlaßt werden, wenn ein vorgewählter Wasserparameter (z.B. Leitfähigkeit, Dichte, Konzentration ausgewählter Wasserinhaltsstoffe) einen vorgegebenen Grenzwert überschreitet. Darüber hinaus gehen dem Kühlwasserkreislauf unbestimmte Mengen Kreislaufwasser zum Beispiel als Spritzwasserverluste, durch Leckagen und durch unkontrollierte Wasserentnahme verloren. Die Menge des abgefluteten und des verdunsteten Wassers sowie die Menge der unbestimmten Wasserverluste wird durch eine entsprechende Menge Frischwasser (Zulaufwasser) ergänzt. Die Ergänzung kann über eine Messung des Füllstandes geregelt werden. Dabei muß gewährleistet bleiben, daß das Kreislaufwasser die korrekten Konzentrationen an Wasserbehandlungsprodukten beibehält. Dementsprechend muß die mit flüssigem Wasser aus dem Kreislaufsystem entfernte Menge an Wasserbehandlungsprodukten möglichst genau ergänzt werden. Beim Auffüllen der durch Verdunstung entwichenen Wassermenge mit Zulaufwasser ist jedoch keine Zugabe von Wasserbehandlungsprodukten erforderlich, da diese bei der Verdunstung von Wasser im Kühlkreislauf verbleiben.

Das in der Technik häufig praktizierte Verfahren, Produkte zur Wasserbehandlung proportional zur Menge an Zulaufwasser zu dosieren, hat den Nachteil, bei Störungen (z.B. Leckagen) zu Fehldosierungen zu führen. Das Problem, die Konzentrationen der Wasserbehandlungsprodukte auf optimale Werte einzustellen, ließe sich selbstverständlich dadurch lösen, daß man die jeweils aktuellen Konzentrationen im Kreislaufsystem mißt und die Sollkonzentration einstellt. Dies scheitert in der Praxis jedoch an der mangelnden Genauigkeit der Meßmethoden und ihrer Empfindlichkeit für Störungen sowie an dem erforderlichen hohen Betreuungsaufwand. Die analytischen Messungen können daher nicht routinemäßig und insbesondere nicht automatisiert und/oder zeitnah am Ort des Kühlkreislaufs erfolgen. Vielmehr ist hierfür eine analytische Ausrüstung erforderlich, die in der Regel nur in Speziallabors zur Verfügung steht.

Im Stand der Technik wurde zur Lösung dieses Analysenproblems vorgeschlagen, die Konzentrate der Wasserbehandlungsprodukte, die dem Kühlkreislauf zudosiert werden, mit Tracersubstanzen wie beispielsweise Fluoreszenzfarbstoffen zu versetzen. Dabei wählt man Tracersubstanzen, deren Konzentrationen durch einfache physikalische Methoden wie beispielsweise optische Absorption- oder Emissionsmessungen bestimmbar sind. Unter der Annahme, daß das Mengenverhältnis Tracersubstanz zu Wasserbehandlungsprodukt im Kühlkreislauf dasselbe bleibt wie im Konzentrat, versucht man, aus der gemessenen Konzentration der Tracersubstanz die vermutlich vorliegende Konzentration an Wasserbehandlungsprodukt zu ermitteln. Derartige Verfahren sind beispielsweise Gegenstand der EP-A-320 086 und der EP-A-730 152. Diese Methoden haben den Nachteil, daß man dem Kühlkreislauf Stoffe zusetzt, aus deren quantitativer Bestimmung man zwar mit Einschränkungen auf die Konzentrationen der wirksamen Wasserbehandlungsprodukte rückschließen kann, die jedoch sonst keine technische Wirkung entfalten. Ein solcher Zusatz technisch wirkungsloser Stoffe erhöht die Gesamtkosten der Kühlwasserkonditionierung und führt beim Abfluten des Kühlwassers zu einer zusätzlichen Umweltbelastung. Außerdem kann die Messung durch andere im Kreislaufwasser vorliegende Stoffe verfälscht werden.

Die EP-B-504 520 schlägt alternativ hierzu vor, als Tracer wirkende Substituenten chemisch an die Wasserbehandlungsprodukte zu binden. Hierdurch wird das Problem umgangen, daß durch Absorptionvorgänge die Tracermoleküle und die Wirkstoffmoleküle in unterschiedlichem Maße aus dem Kreislaufwasser entfernt werden. Gemäß der Lehre der EP-B-504 520 bindet man fluoreszierende Gruppen direkt an polymere Wasserbehandlungsprodukte. Auf Wasserbehandlungsprodukte mit wesentlich niedrigerem Molekulargewicht wie beispielsweise Korrosionsinhibitoren und Komplexbildner ist dieses Verfahren jedoch nicht übertragbar, ohne die Wirkungsweise dieser Produkte zu beeinflussen. In jedem Falle erhöht dieses Verfahren die Kosten der Wasserbehandlungsprodukte, da das Anbinden der fluoreszierenden Gruppe einen zusätzlichen Syntheseschritt erfordert. Außerdem verfälschen fluoreszierende Stoffe im Kreislaufwasser die Messungen.

Aufgrund dieser Problematik wurde im Stand der Technik auch vorgeschlagen, bestimmte Parameter von Abflutwasser und Zulaufwasser miteinander in Relation zu setzen und die Wasserbehandlungsprodukte proportional zu dieser Relation zu dosieren. Beispielsweise schlägt die US-A-3,918,469 ein Verfahren zur Dosierung von Wasserbehandlungsprodukten vor, bei dem man die elektrischen Leitfähigkeiten von Zulaufwasser und Abflutwasser durcheinander dividiert, den Quotienten mit dem Volumenstrom des Zulaufwassers multipliziert und eine Pumpe ansteuert, die proportional zu dem so erhaltenen Zahlenwert Wasserbehandlungsprodukte in den Kühlkreislauf dosiert. Stark schwankende Leitfähigkeiten des Zulaufwassers oder größere Leckagen führen jedoch zu erheblichen Fehldosierungen.

Die Erfindung stellt sich die Aufgabe, ein Verfahren zur Ermittlung der Dosiermengen von Wasserbehandlungsprodukten zur Verfügung zu stellen, bei dem ohne Verwendung von Tracersubstanzen anhand natürlicher Inhaltsstoffe des Kreislauf- und Zulaufwassers bzw. anhand von physikalischen Parametern von Kreislauf- und Zulaufwasser der eingetretene Wasserverlust ermittelt und die erforderliche Dosiermenge für die Wasserbehandlungsprodukte errechnet wird. Dabei soll das Verfahren unterscheiden können, ob die Wasserverluste durch Verdampfung oder durch Ablaufen von Wasser in flüssiger Form hervorgerufen wurden.

Diese Aufgabe wird gelöst durch ein Verfahren zur Ermittlung der Dosiermenge eines Produkts zur Behandlung des Kreislaufwassers von offenen oder geschlossenen Kühlkreisläufen, bei denen Wasserverluste im Kreislaufwasser durch Zulaufwasser ausgeglichen werden, dadurch gekennzeichnet, daß man

a) zu einem vorgegebenen Zeitpunkt $t_0$ den Zahlenwert $P_0$ mindestens eines Parameters des Kreislaufwassers mißt, der ausgewählt ist aus den Konzentrationen ausgewählter Inhaltsstoffe des Kreislaufwassers, die über das Zulaufwasser in den Kühlkreislauf eingebracht werden, und den Werten ausgewählter physikalischer Parameter des Kreislaufwassers,

b) zu einem oder mehreren Zeitpunkten zwischen dem Zeitpunkt $t_0$ und einem später liegenden Zeitpunkt $t_1$ den oder die Zahlenwerte $P_Z$ des oder der im Teilschritt a) im Kreislaufwasser gemessenen Parameter im Zulaufwasser sowie die Menge $V_Z$ des zwischen den Zeitpunkten $t_0$ und $t_1$ zugelaufenen Zulaufwassers mißt,

c) zum Zeitpunkt $t_1$ den Zahlenwert $P_1$ des oder der im Teilschritt a) im Kreislaufwasser gemessenen Parameter im Kreislaufwasser erneut mißt und hieraus

d) den im Zeitintervall zwischen den Zeitpunkten $t_0$ und $t_1$ eingetretenen effektiven Verlust $V_{Verlust}$ an Kreislaufwasser berechnet nach einer der Gleichungen (Ia) oder (Ib):

$$V_{Verlust} = [(P_0 - P_1) \bullet V + P_Z \bullet V_Z]/P_0 \quad (Ia)$$

$$V_{Verlust} = [(P_1^* - P_1) \bullet V]/P_0 \quad (Ib)$$

wobei V das Volumen des Kreislaufwassers zum Zeitpunkt $t_0$ bedeutet, $P_1^*$ den Wert darstellt, den $P_1$ theoretisch haben müßte, wenn keine Wasserverluste eingetreten wären und der sich berechnet gemäß Gleichung (Ic):

$$P_1^* = (P_0 \bullet V + P_Z \bullet V_2) / V \quad (Ic)$$

und alle Volumen- und Konzentrationsangaben auf die gleiche Maßeinheit für das Volumen bezogen werden, sowie

e) die zu dosierende Menge M an Produkt zur Behandlung des Kreislaufwassers nach der Gleichung (II)

$$M = C_{soll} \bullet V_{Verlust} \quad (II)$$

berechnet, wobei $C_{soll}$ die vorzugebende Sollkonzentration des Produkts zur Behandlung des Kreislaufwassers bedeutet, und dem Kreislaufwasser zuführt, wenn $V_{Verlust}$ und/oder M einen vorgegebenen Mindestwert überschreitet.

Da sich Gleichung (Ib) durch Einsetzen von Gleichung (Ic) in Gleichung (Ia) umformen läßt, ist es prinzipiell unwesentlich, ob man Gleichung (Ia) oder Gleichung (Ib) in Verbindung mit Gleichung (Ic) anwendet. Das Arbeiten mit Gleichungen (Ib) und (Ic) kann für praktische Zwecke jedoch einfacher sein.
Dieses Verfahren ist völlig unabhängig von der chemischen Natur der zu dosierenden Wasserbehandlungsprodukte. Beispielsweise kann es sich hierbei handeln um Entschäumer, Härtestabilisatoren, Dispergatoren, Korrosionsinhibitoren und Biozide und Kombinationen hiervon. Einzelne Stoffe und Stoffklassen, die hierfür beispielsweise in Frage kommen, wurden einleitend aufgezählt. Demnach können die dort beispielhaft genannten Stoffe und Stoffgruppen im Rahmen des erfindungsgemäßen Verfahrens dosiert werden. Selbstverständlich können für die unterschiedlichen Wasserbehandlungsprodukte unterschiedliche Werte für $C_{soll}$ vorgegeben werden.
Zur Durchführung des erfindungsgemäßen Verfahrens muß zuvor festgelegt werden, welche Parameter des Kreislaufwassers und des Zulaufwassers man messen will. Beispielsweise können als Parameter, deren Zahlenwerte in den Teilschritten a) bis c) gemessen werden, physikalische Größen wie beispielsweise die elektrische Leitfähigkeit und/oder die Konzentrationen von Stoffen gemessen werden, die sich natürlicher Weise im Zulaufwasser und somit auch im Kreislaufwasser befinden. Im Rahmen des erfindungsgemäßen Verfahrens ist es also nicht erforderlich, dem Kreislaufwasser fremde Tracersubstanzen zuzusetzen. Als Parameter, dessen Zahlenwert in den Teilschritten a) bis c) gemessen wird, kommen beispielsweise die elektrische Leitfähigkeit, die Säurekapazität, beispielsweise bis pH = 4,3 (sogenannter $K_{S4,3}$-Wert, früher als "m-Wert" bezeichnet. Die Bestimmung kann nach DIN 38409, Teil 7 erfolgen.), und/oder die Konzentrationen von Natrium-, Kalium-, Calcium-, Magnesium-, Nitrat-, Sulfat- und/oder Chloridionen in Betracht. Die Säurekapazität in mmol/l wird bestimmt, indem man 100 ml Wasser mit einer 0,1 n Säurelösung bis zu einem vorgegebenen pH-Wert titriert. Wählt man als vorgegebenen pH-Wert 4,3, so spricht man von dem $K_{S4,3}$-Wert. Der Verbrauch an ml 0.1 n Säure entspricht dem Zahlenwert der Säurekapazität.
Vorzugsweise wählt man hierbei einen oder mehrere Parameter, die durch die zugesetzten Wasserbehandlungsprodukte nicht oder kaum verändert werden. Jedoch ist es durchaus möglich, Parameter zu messen, die von den eingesetzten Wasserbehandlungsprodukten beeinflußt werden. In solchen Fällen ist es lediglich erforderlich, daß man die Änderung des Zahlenwerts des gemessenen Parameters, die auf den Zusatz der Wasserbehandlungsprodukte zurückgeht, aus der bekannten (beispielsweise gemessenen oder abgeschätzten) zugesetzten Menge dieser Produkte ermittelt und von den im Kreislaufwasser gemessenen Werten vor der weiteren Berechnung gemäß Teilschritten d) und e) abzieht.
Vorzugsweise wählt man als Parameter, deren Werte in den Teilschritten a) bis c) gemessen werden, elektrische Leitfähigkeit und/oder die Konzentration von Chlorid- und/oder Natriumionen. Die Konzentrationen können mit Ionen-selektiven Elektroden oder auch durch potentiometrische Titration bestimmt werden. Die Messung der elektrischen Leitfähigkeit ist besonders bevorzugt, da diese einfach mit einer Leitfähigkeitselektrode gemessen werden kann.
Dabei kann die Chloridkonzentration beispielsweise durch eine Biozidbehandlung in Form einer Chlorung oder durch Zugabe von Hypochlorit beeinflußt werden. Auch die Natriumkonzentration kann durch eine Biozidbehandlung (Zugabe von Natriumhypochlorit und/oder Natriumbromid) beeinflußt werden. In diesen Fällen zieht man den Anteil an der Gesamtkonzentration der Chlorid- und/oder Natriumionen im Kreislaufwasser, der auf die Zugabe bekannter Mengen der biozid wirkenden Salze zurückzuführen ist, vor der weiteren Berechnung ab.

Wird die Bilanzierung über die Leitfähigkeit vorgenommen, kann der Einfluß der Säuredosierung zur pH-Kontrolle auf die Leitfähigkeit im Kreislaufwasser über die Messung der dosierten Mengen mit Hilfe der aus Tabellenwerken zu entnehmenden oder experimentell zu bestimmenden Äquivalenzleitfähigkeiten gemäß der Reaktionsgleichung

$$HCO_3^- + HX \rightarrow CO_2 + H_2O + X^-,$$

mit $X^- = Cl^-$, $NO_3^-$, $\frac{1}{2} SO_4^{2-}$ etc. bestimmt werden.

Demnach mißt man also im Teilschritt a) zu einem vorgegebenen Zeitpunkt $t_0$ den Zahlenwert $P_0$ mindestens eines physikalischen Parameters oder der Konzentration mindestens eines natürlichen Inhaltsstoffs des Kreislaufwassers. Zu einem später liegenden Zeitpunkt $t_1$ mißt man im Teilschritt c) den Zahlenwert des in Teilschritt a) ausgewählten Parameters erneut und erhält den Zahlenwert $P_1$. In der Zeitspanne zwischen den Zeitpunkten $t_0$ und $t_1$, die auch als Regelintervall bezeichnet werden kann, ergänzt man den Wassergehalt des Kreislaufsystems durch Zulaufwasser, dessen Menge $V_Z$ man mißt. Hierfür stehen im Stand der Technik Durchlaufmesser zur Verfügung. Weiterhin mißt man im Teilschritt b) zu einem oder mehreren Zeitpunkten im Regelintervall den Zahlenwert des im Teilschritt a) für das Kreislaufwasser ausgewählten Parameters auch im Zulaufwasser. Hierbei erhält man den Zahlenwert $P_Z$. Führt man im Regelintervall im Zulaufwasser die Messung dieses Parameters nicht einmal, sondern nach einzelnen Teilintervallen wiederholt mehrmals durch, können die Einzelwerte zu einem gemittelten Zahlenwert $P_Z$ gemittelt werden. Genauer ist es jedoch, in diesen Teilintervallen auch die jeweilige Zusatzwassermenge zu messen, den jeweiligen Wert von $P_Z$ mit der entsprechenden Zusatzwassermenge zu multiplizieren und die Werte dieser Produkte über das Regelintervall zu addieren.

Aus den gemessenen Zahlenwerten für den ausgewählten Parameter läßt sich nun nach der Gleichung (Ia) oder (Ib)

$$V_{Verlust} = [(P_0 - P_1) \cdot V + P_Z \cdot V_Z] / P_0 \qquad (Ia)$$

$$V_{Verlust} = [(P_1^* - P_1) \cdot V] / P_0 \qquad (Ib)$$

ein effektiver Verlust an Kreislaufwasser berechnen.

Dieser kann positiv oder negativ sein, je nachdem, ob die Wasserverluste im Kreislaufwasser durch Abflut und Leckage oder durch Verdampfung entstanden sind und je nachdem, ob der Wasserverlust im Regelintervall durch richtige, zu geringe oder zu hohe Mengen Zulaufwasser ausgeglichen wurde. So erhält man beispielsweise einen negativen Wert für $V_{Verlust}$, wenn dem Kreislaufwasser lediglich Wasser durch Verdampfen entzogen und ihm kein Frischwasser zugeführt wurde. In diesem Fall wird man für den ausgewählten Parameter aufgrund der Aufkonzentrierung zum Zeitpunkt $t_1$ einen höheren Zahlenwert $P_1$ messen als den Zahlenwert $P_0$ zum Zeitpunkt $t_0$. Der erste Summand in Gleichung (Ia) ist dann negativ. Ist $V_z$ klein oder gar 0, wird der zweite Summand nicht groß genug sein, damit Gleichung (Ia) ein positives Ergebnis liefert. Eine ähnliche Überlegung gilt fiir Gleichung (Ib) in Verbindung mit Gleichung (Ic).

Berechnet man nun in Teilschritt e) Gleichung (II)

$$M = C_{soll} \cdot V_{Verlust} \qquad (II)$$

so erhält man bei einem negativen Wert für $V_{Verlust}$ einen negativen Wert für die zu dosierende Menge M an Wasserbehandlungsprodukt. Dies ist folgerichtig, da sich die Konzentration der Wasserbehandlungsprodukte durch das Verdampfen von Kreislaufwasser erhöht, ohne daß eine Verdünnung durch Zulaufwasser eintritt. In der Praxis bedeutet dies natürlich, daß kein Wasserbehandlungsprodukt zudosiert werden muß.

Nimmt man in einem anderen Gedankenbeispiel - das beispielsweise für einen geschlossenen Kühlkreislauf gelten könnte - an, daß Verluste an Kreislaufwasser nur als Flüssigkeitsverlust, nicht jedoch durch Verdampfung eintreten und daß man weiterhin im Regelintervall kein Frischwasser zugibt. Dann wird man zu den Zeitpunkten $t_0$ und $t_1$ für den ausgewählten Parameter gleiche Zahlenwerte messen, d.h. $P_0 = P_1$. Der erste Summand in Gleichung (Ia) ist dann 0. Gibt man kein Frischwasser zu, ist also $V_z = 0$, so hat auch der zweite Summand den Wert 0. Damit errechnet sich $V_{Verlust}$ zu 0, so daß gemäß Gleichung (II) auch gilt M = 0. Demnach wäre in diesem Gedankenbeispiel kein Wasserbehandlungsprodukt zu dosieren. Dies ist völlig korrekt, da unter den angenommenen Umständen die im Kühlkreislauf befindlichen Wasserbehandlungsprodukte weder aufkonzentriert noch verdünnt werden.

Gleichung (Ia) oder (Ib) liefert erwartungsgemäß dann einen positiven Wert für $V_{Verlust}$, wenn mindestens eine der beiden folgenden Bedingungen erfüllt ist:

1. $P_1$ ist kleiner als $P_0$. Dies bedeutet, daß das durch Verdampfung aufkonzentrierte Kreislaufwasser im Regelintervall durch soviel Frischwasser verdünnt wurde, daß der Wert des gemessenen Parameters, beispielsweise die Konzentration einer bestimmten Ionenart, am Ende des Regelintervalls kleiner geworden ist als an dessen Anfang.

2. Dem Kühlkreislauf ist ein so großes Volumen $V_Z$ an Zusatzwasser zugesetzt worden, daß der zweite Summand in Gleichung (Ia) größer wird als der erste.

Beide Fälle bedeuten, daß sich auch die Konzentration der Wasserbehandlungsprodukte im Kreislaufwasser verringert hat. Gleichung (II) liefert dann einen positiven Wert fiir M. Entsprechend werden eines oder mehrere Produkte zur Behandlung des Kreislaufwassers entsprechend ihren jeweiligen Werten von $C_{soll}$ zudosiert.

Demnach muß logischerweise kein Wasserbehandlungsprodukt zudosiert werden, solange $V_{Verlust}$ und damit M nicht größer als 0 sind. Es ist daher sinnvoll, einen Mindestwert für $V_{Verlust}$ und/oder M vorzugeben (der im Grenzfall 0 sein kann), so daß erst dann Wasserbehandlungsprodukt gemäß Gleichung (II) zudosiert wird, wenn dieser festgelegte Mindestwert überschritten wird. Ergeben die Messungen innerhalb eines Regelintervalls, daß der vorgegebene Mindestwert nicht überschritten wird, so verlängert man zumindest rechnerisch das Regelintervall solange, bis der erfindungsgemäß anzuwendende Algorithmus einen Zahlenwert für M liefert, der den vorgegebenen Mindestwert überschreitet. Beispielsweise kann das Regelintervall dadurch verlängert werden, daß man die Verfahrensschritte b) bis e) solange zu immer später liegenden Zeitpunkten $t_1$ wiederholt, bis $V_{Verlust}$ und/oder M den vorgegebenen Mindestwert überschreitet.

Technisch gleichbedeutend hierzu ist folgendes Verfahren: Sind die in einem Regelintervall erhaltenen Werte für $V_{Verlust}$ und/oder M nicht größer als der vorgegebene Mindestwert, so wird der Wert von $V_{Verlust}$ und/oder M in einem Register gespeichert. Man beginnt nun ein neues Regelintervall mit neu festgelegten Zeitpunkten $t_0$ und $t_1$, d.h. man beginnt die Abfolge der Verfahrensschritte a) bis e) von vorne. Der für dieses zweite Regelintervall erhaltene Wert von $V_{Verlust}$ und/oder von M wird zu dem im Register gespeicherten Wert addiert. Ist die Summe immer noch kleiner als der vorgegebene Mindestwert, beginnt man ein weiteres Regelintervall und verfährt entsprechend. Sobald nach einer beliebigen Anzahl von Regelintervallen der aufsummierte Gesamtwert für $V_{Verlust}$ und/oder M den vorgegebenen Mindestwert erstmals überschreitet, wird die entsprechende Menge an Wasserbehandlungsprodukt gemäß Gleichung (II) nachdosiert. Danach beginnt gegebenenfalls dieser gesamte Zyklus von vorne.

In der Regel ist man bestrebt, Wasserbehandlungschemikalien wie beispielsweise Biozide, Härtestabilisatoren, Dispergatoren und/oder Korrosionsinhibitoren so zu dosieren, daß ihre Konzentration bei einem stationären Betrieb des Kühlkreislaufs, d.h. bei einer konstanten Eindickung, möglichst konstant bleibt. Für diese Produkte wird man also den Mindestwert für M zwar größer als 0, jedoch so gering wählen, daß die vorzugebende Dosiereinrichtung diese Menge gerade noch genau genug dosieren kann. Manche Produkte wie beispielsweise Dispergatoren oder Biozide werden auch häufig in Form einer sogenannten Stoßdosierung dosiert. Hierbei gibt man zu bestimmten Zeitpunkten größere Mengen an Produkt zu und läßt anschließend dessen Konzentration im Kühlkreislauf abklingen, bis die nächste Produktmenge dosiert wird. Im Rahmen des erfindungsgemäßen Verfahrens kann dies so erfolgen, daß man für die Produkte einen entsprechend hohen Mindestwert für $V_{Verlust}$ und/oder M vorgibt, unterhalb dessen keine Dosierung, oberhalb dessen aber eine entsprechend hohe Dosierung erfolgt.

Im erfindungsgemäßen Verfahren muß also mindestens ein Parameter ausgewählt werden, dessen Zahlenwerte im Kreislaufwasser und im Zulaufwasser zu unterschiedlichen Zeitpunkten gemessen und in die Gleichung (Ia) oder (Ib) und (Ic) eingesetzt werden. Um die Verfahrenssicherheit zu erhöhen, können auch zwei oder mehr Parameter ausgewählt werden, die man im Verlauf der Verfahrensschritte a) bis c) möglichst zeitnah, am besten gleichzeitig mißt. Aus den Werten $P_0$, $P_1$ und $P_Z$ der einzelnen gewählten Parameter wird man infolge von Meßungenauigkeiten in der Regel gemäß Gleichung (I) unterschiedliche Werte für $V_{Verlust}$ erhalten. Hieraus errechnet man durch Mittelwertbildung einen mittleren Wert für $V_{Verlust}$ und setzt diesen mittleren Wert in Gleichung (II) ein. Alternativ hierzu kann man selbstverständlich für die Einzelwerte von $V_{Verlust}$ jeweils Gleichung (II) ausrechnen und danach die erhaltenen Einzelwerte für M mitteln. Durch diese Mittelwertbildung kann vermieden werden, daß ein zufälliger größerer Meßfehler zu einer falschen Produktdosierung führt.

Weiterhin erlaubt die Messung mehrerer Parameter, eine Fehlfunktion der vorzusehenden Meßeinrichtung zu erkennen. Unterscheiden sich nämlich die mit den jeweils gewählten Parametern erhaltenen Werte $V_{Verlust}$ beträchtlich, kann ein Meßfehler vorliegen, der eine Überprüfung der Meßeinrichtung erforderlich machen kann. Wählt man für die Messung drei oder mehr Parameter, läßt sich an der Streuung der Ergebnisse für $V_{Verlust}$ erkennen, welche der einzelnen Meßeinrichtungen für die einzelnen Parameter fehlerhaft arbeitet. Hierauf kann eine automatische Überwachung der Funktionsfähigkeit der gesamten Meßeinrichtung aufgebaut werden. Hierbei kann beispielsweise vorgesehen werden, daß das erfindungsgemäße Verfahren solange periodisch immer weiter fortgesetzt wird, solange sich die aus den einzelnen Parametern errechneten Werte für $V_{Verlust}$ nicht um einen vorzugebenden Höchstbetrag unterscheiden. Wird dieser Höchstbetrag überschritten, ist eine Überprüfung einzelner oder aller Komponenten der Meßeinrichtung erforderlich. Für eine automatisierte Selbstkontrolle kann vorgesehen werden, daß im Falle festgestellter Abweichungen oder auch unabhängig hiervon nach vorzugebenden Zeitintervallen Standardlösungen vermessen werden, die bekannte Zahlenwerte für die zu messenden Parameter aufweisen. Durch eine derartige Kontrollmessung kann eine Fehlfunktion einer einzelnen Meßeinrichtung erkannt werden.

Für die Dosierung der gemäß Gleichung (II) berechneten Mengen an Produkten zur Behandlung des Kreislaufwassers stehen im Stand der Technik geeignete Dosiereinrichtungen zur Verfügung. Beispielsweise kann die Dosierung über Kolbenpumpen erfolgen, bei denen man den Kolbenhub, die Pumpfrequenz und/oder die Pumpdauer entsprechend steuert. Oder man steuert die Dosiermenge über die Füllstandsabnahme eines Vorratsbehälters für das jeweilige Wasserbehandlungsprodukt oder mit Hilfe von Ovalradzählern.

Das Verfahren ist unabhängig davon, ob für das Zulaufwasser nur eine oder mehrere Quellen zur Verfügung stehen. Verwendet man mehrere Quellen für Zulaufwasser, so wird in einem Regelintervall der Teilschritt b) für jede der Zulaufwasserquellen getrennt durchgeführt, die Produkte $P_z \cdot V_z$ für jede Zulaufwasserquelle gebildet und deren Summe für alle Zulaufwasserquellen in Gleichung (Ia) oder (Ic) eingesetzt.

Wie lange man ein Regelintervall, also den Zeitabstand zwischen den Zeitpunkten $t_0$ und $t_1$ innerhalb einer Abfolge der Verfahrensschritte a) bis e) wählt, kann von jeweils anlagenspezifischen Bedingungen abhängen. Man kann das Regelintervall um so länger wählen, je konstanter die Betriebsbedingungen sind. Bei konstanter Abflut, konstanter Verdampfungsrate und konstantem Frischwasserzulauf (und konstanter Qualität des Zulaufwassers) können lange Regelintervalle gewählt werden, die beispielsweise im Bereich von etwa 0,1 bis etwa 48 Stunden liegen. Schwanken die Betriebsbedingungen oder die Qualität des Zulaufwassers jedoch kurzfristig, sind kürzere Regelintervalle empfehlenswert. Sie können beispielsweise im Bereich von etwa 5 bis etwa 120 Minuten liegen. Demgemäß führt man das erfindungsgemäße Verfahren vorzugsweise so durch, daß die Zeitpunkte $t_0$ und $t_1$ innerhalb einer Abfolge der Verfahrensschritte a) bis e) zwischen etwa 5 Minuten und etwa 48 Stunden auseinander liegen.

Für die Dosierung der Wasserbehandlungsprodukte im Rahmen des erfindungsgemäßen Verfahrens kann auch folgende Vorgehensweise gewählt werden: Man führt - wie im Stand der Technik üblich - eine Grunddosierung durch, die proportional zur Menge des Zulaufwassers ist. Die Menge des Zulaufwassers und die dosierten Mengen der Wasserbehandlungsprodukte werden festgehalten. Zusätzlich führt man die erfindungsgemäßen Verfahrensschritte aus, um zu bestimmen, welche Mengen an Wasserbehandlungsprodukte im Regelintervall hätten zudosiert werden sollen. Man vergleicht die nach dem erfindungsgemäßen Verfahren ermittelten Dosiermengen mit denjenigen, die während der Grunddosierung bereits dosiert wurden, und gibt lediglich noch verbleibende Differenzmengen zu.

Für das erfindungsgemäße Verfahren wird vorzugsweise vorgesehen, daß es programmgesteuert und automatisch abläuft. Dies heißt, daß man die Verfahrensschritte a) bis e) periodisch wiederholt, wobei der jeweils neue Zeitpunkt $t_0$ der zu startenden Abfolge der Verfahrensschritte a) bis e) zeitlich gleich oder nach dem Zeitpunkt $t_1$ der vorhergehenden Abfolge der Verfahrensschritte a) bis e) liegt. Das heißt, die einzelnen Regelintervalle folgen zeitlich aufeinander. Dabei kann man zwischen zwei Regelintervallen einen beliebigen Zeitraum verstreichen lassen, solange kein Zusatzwasser zugeführt wird. Vorzugsweise geht man jedoch so vor, daß man die einzelnen Regelintervalle unmittelbar aufeinander folgen läßt. Vorzugsweise ist also der Zeitpunkt $t_1$ eines vorangegangenen Regelintervalls gleich dem Zeitpunkt $t_0$ des hierauf folgenden Regelintervalls. Das heißt, daß ein zu einem bestimmten Zeitpunkt im Kreislaufwasser gemessener Zahlenwert P eines Parameters der Wert $P_1$ für das gerade abgeschlossene und gleichzeitig der Wert $P_0$ für das gerade beginnende Regelintervall sein kann.

Ein Verschmutzen der verwendeten Meßeinrichtung wird verhindert oder zumindest verzögert, wenn man das Kreislaufwasser und/oder das Zulaufwasser filtriert oder zentrifugiert, bevor der Zahlenwert $P_0$, $P_1$ oder $P_z$ eines Parameters gemessen wird.

Im Sinne eines automatischen und periodisch wiederholten Ablaufs des erfindungsgemäßen Verfahrens wird vorzugsweise vorgesehen, daß die Abfolge der Verfahrensschritte a) bis e) programmgesteuert gestartet und durchgeführt wird.

Zu Kontrollzwecken oder bei festgestellten Schwierigkeiten wird jedoch vorzugsweise auch vorgesehen, daß die Abfolge der Verfahrensschritte a) bis e) jederzeit durch eine manuell gegebene Anweisung gestartet werden kann. Hierbei kann ausgewählt werden, ob die zu diesem Zeitpunkt gerade noch automatisch ablaufende Abfolge der Verfahrensschritte a) bis e) noch zu Ende durchgeführt oder ob sie abgebrochen und neu gestartet wird.

Vorzugsweise führt man das erfindungsgemäße Verfahren vollständig oder zumindest weitgehend automatisch durch. Dies bedeutet, daß man für die einzelnen Meßparameter Meßeinrichtungen vorsieht, die ohne manuelles Eingreifen programmgesteuert betrieben werden können. Elektrochemische oder optische Meßverfahren sind hierfür besonders geeignet. Hierbei fallen die Meßergebnisse in Form elektrischer Signale an, die durch eine geeignete Auswerteeinheit weiter verarbeitet und in den Steuerrechner übertragen werden können. Insbesondere sieht man im Rahmen eines automatisiert ablaufenden Verfahrens vorzugsweise vor, daß einer oder mehrere der während des Ablaufs der Verfahrensschritte a) bis e) erhaltenen Meßwerte und/oder eines oder mehrere der Berechnungsergebnisse auf Datenträger gespeichert und/oder an einen vorgegebenen Ort übertragen werden. Die Speicherung auf Datenträger ermöglicht es. die nach dem erfindungsgemäßen Verfahren bestimmten Werte für $V_{Verlust}$ und die hieraus gemäß Gleichung (II) ermittelten Dosiermengen der Wasserbehandlungsprodukte über längere Zeiträume zu verfolgen und auszuwerten. Hierdurch wird den Anforderungen an eine moderne Qualitätssicherung Rechnung getragen. Durch die Übertragung der Daten bzw. der Berechnungsergebnisse an einen vorgegebenen Ort ist es möglich, sich auch aus der Feme jederzeit einen Einblick in die Betriebsweise des Kühlkreislaufs und über die Dosiermengen der Wasserbehandlungsprodukte zu verschaffen. Dabei kann der vorgegebene Ort innerhalb des Werkes liegen, zu dem der Kühlkreislauf gehört, und beispielsweise eine zentrale Leitwarte darstellen. Der vorgegebene Ort kann aber auch ein Ort außerhalb dieses Werkes sein. Beispielsweise kann dieser Ort beim Hersteller der eingesetzten Wasserbehandlungsprodukte liegen. Dieser ist dann von seinem eigenen Firmensitz aus imstande, die Verbräuche der Wasserbehandlungsprodukte zu verfolgen und eine rechtzeitige, bedarfsgerechte Nachlieferung zu veranlassen. Hierdurch können die Lagerbestände der Wasserbehandlungsprodukte beim Anwender verringert werden. Weiterhin ist das Steuersystem für die Durchführung der Verfahrensschritte a) bis e) vorzugsweise so eingerichtet, daß die Abfolge dieser Verfahrensschritte jederzeit von dem vorgegebenen Ort aus gestartet werden kann. Weiterhin wird vorzugsweise vorgesehen, daß von diesem entfernten Ort aus auch Kontrollmessungen zur Überprüfung der verwendeten Meßeinrichtung angestoßen werden können. Weiterhin kann vorgesehen werden, daß von dem vorgegebenen Ort aus die Sollkonzentration $C_{soll}$ der Wasserbehandlungsprodukte in Gleichung (II) und/oder andere Parameter des Kreislaufsystems (z. B. Systemvolumen = Wassermenge) verändert werden kann. Damit ist es möglich, aus der Ferne die Dosiermengen der Wasserbehandlungsprodukte an möglicherweise geänderte Betriebszustände des Kühlkreislaufsystems, beispielsweise an eine vorgesehene höhere Eindickung, anzupassen. Dies erhöht die Flexibilität des erfindungsgemäßen Verfahrens.

Das erfindungsgemäße Verfahren kann mit bekannten Verfahren zum Beeinflussen von Parametern im Kühlwasserkreislauf sowie zur Erfolgskontrolle der vorgenommenen Dosierung der Wasserbehandlungsprodukte gekoppelt werden. Beispielsweise kann im erfindungsgemäßen Verfahren zusätzlich vorgesehen werden, daß der pH-Wert im Kreislaufwasser kontinuierlich oder zu bestimmten Zeitpunkten gemessen wird. Hierfür kann beispielsweise eine pH-sensitive Elektrode eingesetzt werden. Bei einer Abweichung vom Sollwert kann der pH-Wert automatisch durch Zudosieren von Säure oder Lauge korrigiert werden. Werden durch diese Korrekturmaßnahmen diejenigen Parameter im Kühlwasserkreislauf verändert, die im erfindungsgemäßen Verfahren zur Bestimmung von $V_{Verlust}$ herangezogen werden, so kann dieser Einfluß vom Steuersystem des Verfahrens automatisch berücksichtigt werden.

Weiterhin können im Stand der Technik bekannte Einrichtungen vorgesehen werden, die weitere für die Kühlwasserbehandlung wichtige Parameter messen und aufzeichnen. Vorzugsweise können diese Werte von dem vorstehend beschriebenen vorgegebenen Ort aus abgefragt werden. Stellt man hierbei Abweichungen vom erwünschten Betriebszustand fest, können dann von dem vorgegebenen Ort aus die Sollkonzentrationen $C_{soll}$ der Wasserbehandlungsprodukte so abgeändert werden, daß sich der Betriebszustand des Kühlkreislaufs in die erwünschte Richtung verschiebt. Beispielsweise können Einrichtungen vorgesehen werden, die Wasserparameter wie beispielsweise Konzentrationen von $Ca^{2+}$, $Mg^{2+}$, $Cl^-$, $SO_4^{2-}$, Silicat, ausgewählte Schwermetalle, beispielsweise Fe, Cu, Cr, Mn, Zn, Säurekapazität, z.B. bis zum pH-Wert 8,2 oder 4,3, Wassertrübung, Wassertemperatur, Redox-Potential, Korrosions- und Foulingrate bestimmen und aufzeichnen.

Weiterhin wird vorzugsweise vorgesehen, daß im Rahmen des erfindungsgemäßen Verfahrens die Füllstände der Wasserbehandlungsprodukte in ihrem jeweiligen Vorratsbehälter überwacht werden. Bei Unterschreiten eines vorgegebenen Mindestfüllstandes in einem oder mehreren Vorratsbehältern kann eine Alarmmeldung in die Meßwarte und/oder an einen vorgegebenen Ort abgegeben werden.

Weiterhin kann die Steuereinrichtung für das erfindungsgemäße Verfahren mit Meßeinrichtungen gekoppelt werden, die die Eindickung des Kreislaufwassers messen. Zum Messen der Eindickrate sind unterschiedliche Parameter wie beispielsweise Dichte des Kreislaufwassers, elektrische Leitfähigkeit, Gesamthärte oder die Konzentrationen vorgegebener Wasserinhaltsstoffe geeignet. Beim Erreichen vorgegebener Schwellenwerte kann automatisch eine Abflutung eines Teils des Kreislaufwassers vorgesehen werden. Jedoch ist es vorzugsweise auch möglich, unabhängig hiervon von einer Leitwarte oder von einem vorgegebenen Ort aus eine Abflutung von Kreislaufwasser vorzunehmen.

Das erfindungsgemäße Verfahren zur Ermittlung der Dosiermengen von Wasserbehandlungsprodukten ist insbesondere für offene Kühlkreisläufe konzipiert. Bei diesen treten Verluste von Kreislaufwasser auf, die unterschiedliche Ursachen haben: Verdampfung, gesteuerte Abflutung und/oder unkontrollierte Spritzverluste und Leckagen. Das Verfahren ist jedoch auch zur Konditionierung geschlossener Kreisläufe geeignet, wo theoretisch überhaupt keine Verluste an Kreislaufwasser eintreten sollten. Da jedoch auch bei solchen geschlossenen Kühlkreisläufen Wasserverluste durch Leckagen eintreten können, die durch eine Frischwasserzufuhr ausgeglichen werden, kann das erfindungsgemäße Verfahren auch hierfür eingesetzt werden.

**Patentansprüche**

1. Verfahren zur Ermittlung der Dosiermeng eines Produkts zu Behandlung des Kreislaufwassers von offenen oder geschlossenen Kühlkreisläufen, bei denen Wasserverluste im Kreislaufwasser durch Zulaufwasser ausgeglichen werden, **dadurch gekennzeichnet, daß** man

   a) zu einem vorgegebenen Zeitpunkt $t_0$ den Zahlenwert $P_0$ mindestens eines Parameters des Kreislaufwassers mißt, der ausgewählt ist aus den Konzentrationen ausgewählter Inhaltsstoffe des Kreislaufwassers, die über das Zulaufwasser in den Kühlkreislauf eingebracht werden, und den Werten ausgewählter physikalischer Parameter des Kreislaufwassers,

   b) zu einem oder mehreren Zeitpunkten zwischen dem Zeitpunkt $t_0$ und einem später liegenden Zeitpunkt t, den oder die Zahlenwerte $P_z$ des oder der im Teilschritt a) im Kreislaufwasser gemessenen Parameter im Zulaufwasser sowie die Menge $V_z$ des zwischen den Zeitpunkten $t_0$ und $t_1$ zugelaufenen Zulaufwassers mißt,

   c) zum Zeitpunkt $t_1$ den Zahlenwert $P_1$ des oder der im Teilschritt a) im Kreislaufwasser gemessenen Parameter im Kreislaufwasser erneut mißt und hieraus

   d) den im Zeitintervall zwischen den Zeitpunkten $t_0$ und $t_1$ eingetretenen effektiven Verlust $V_{Verlust}$ an Kreislaufwasser berechnet nach einer der Gleichungen (Ia) oder (Ib):

   $$V_{Verlust} = [(P_0 - P_1) \cdot V + P_z \cdot V_z]/P_0$$

   (Ia)

   $$V_{Verlust} = [(P_1^* - P_1) \cdot V]/P_0 \qquad (Ib)$$

   wobei V das Volumen des Kreislaufwassers zum Zeitpunkt $t_0$ bedeutet,
   $P_1^*$ den Wert darstellt, den $P_1$ theoretisch haben müßte, wenn keine Wasserverluste eingetreten wären und der sich berechnet gemäß Gleichung (Ic):

   $$P_1^* = (P_0 \cdot V + P_z \cdot V_z)/V \qquad (Ic)$$

   und alle Volumen- und Konzentrationsangaben auf die gleiche Maßeinheit für das Volumen bezogen werden, sowie

   e) die zu dosierende Menge M an Produkt zur Behandlung des Kreislaufwassers nach der Gleichung (II)

   $$M = C_{soll} \cdot V_{Verlust} \qquad (II)$$

   berechnet, wobei $C_{soll}$ die vorzugebende Sollkonzentration des Produkts zur Behandlung des Kreislaufwassers bedeutet, und dem Kreislaufwasser zuführt, wenn $V_{Verlust}$ und/oder M einen vorgegebenen Mindestwert überschreitet.

2. Verfahren nach Anspruch 1, **dadurch gekennzeichnet, daß** das Produkt zur Behandlung des Kreislaufwassers ausgewählt ist aus Entschäumern, Härtestabilisatoren, Dispergatoren, Korrisionsinhibitoren und Bioziden und Kombinationen hiervon.

3. Verfahren nach einem oder beiden der Ansprüche 1 und 2, **dadurch gekennzeichnet, daß** die in den Teilschritten a) bis c) gemessenen Parameter des Kreislauf- und Zulaufwassers ausgewählt sind aus der elektrischen Leitfähigkeit, der Säurekapazität und aus den Konzentrationen von Natrium-, Kalium-, Calcium-, Magnesium-, Nitrat-, Sulfat- und Chloridionen.

4. Verfahren nach einem oder mehreren der Ansprüche 1 bis 3, **dadurch gekennzeichnet, daß** für den Fall, daß nach einem Durchlaufen der Verfahrensschritte a) bis e) $V_{Verlust}$ und/oder M einen vorgegebenen Mindestwert nicht überschreitet, die Verfahrensschritte b) bis e) solange zu immer später liegenden Zeitpunkten $t_1$ wiederholt werden, bis $V_{Verlust}$ und/oder M den vorgegebenen Mindestwert überschreitet.

5. Verfahren nach einem oder mehreren der Ansprüche 1 bis 3, **dadurch gekennzeichnet, daß** man für den Fall, daß nach einem Durchlaufen der Verfahrensschritte a) bis e) $V_{Verlust}$ und/oder M einen vorgegebenen Mindestwert nicht überschreitet, den Zahlenwert von $V_{Verlust}$ und/oder M in einem Register speichert, die Verfahrensschritte a) bis e) zu später liegenden Zeitpunkten $t_0$ und $t_1$ so oft erneut durchführt und jeweils den erhaltenen Zahlenwert von $V_{Verlust}$ und/oder M zu dem im Register gespeicherten Zahlenwert addiert, bis der aufsummierte Gesamtwert von $V_{Verlust}$ und/oder M den vorgegebenen Mindestwert überschreitet.

**6.** Verfahren nach einem oder mehreren der Ansprüche 1 bis 5, **dadurch gekennzeichnet, daß** die Zeitpunkte $t_0$ und $t_1$ innerhalb einer Abfolge der Verfahrensschritte a) bis e) zwischen 5 Minuten und 48 Stunden auseinanderliegen

**7.** Verfahren nach einem oder mehreren der Ansprüche 1 bis 6, **dadurch gekennzeichnet, daß** man die Verfahrensschritte a) bis e) periodisch wiederholt, wobei der jeweils neue Zeitpunkt $t_0$ zeitlich gleich oder nach dem Zeitpunkt $t_1$ der vorhergehenden Abfolge der Verfahrensschritte a) bis e) liegt.

**8.** Verfahren nach einem oder mehreren der Ansprüche 1 bis 7, **dadurch gekennzeichnet, daß** die Abfolge der Verfahrensschritte a) bis e) programmgesteuert gestartet und durchgeführt wird.

**9.** Verfahren nach einem oder mehreren der Ansprüche 1 bis 7, **dadurch gekennzeichnet, daß** die Abfolge der Verfahrensschritte a) bis e) durch eine manuell gegebene Anweisung gestartet wird.

**10.** Verfahren nach einem oder mehreren der Ansprüche 1 bis 9, **dadurch gekennzeichnet, daß** man das Kreislaufwasser und/oder das Zulaufwasser filtriert oder zentrifugiert, bevor der Zahlenwert $P_0$, $P_1$ oder $P_z$ eines Parameters gemessen wird.

**11.** Verfahren nach einem oder mehreren der Ansprüche 1 bis 10, **dadurch gekennzeichnet, daß** man im Teilschritt b) zu mehreren Zeitpunkten zwischen den Zeitpunkten $t_0$ und t, einzelne Zahlenwerte $P_Z$ im Zulaufwasser mißt und
entweder diese einzelnen Zahlenwerte zu einem mittleren Zahlenwert $P_Z$ mittelt und diesen mit dem Volumen $V_Z$ des zwischen $t_0$ und $t_1$ zugelaufenen Zulaufwassers zu $P_Z \cdot V_Z$ multiplizert
oder das Produkt aus jedem einzelnen Zahlenwert mit demjenigen Teilvolumen $V_Z$ des Zulaufwassers berechnet, das zu dem jeweiligen einzelnen Zahlenwert gehört, und die einzelnen Produkte zu einem Gesamtwert $P_Z \cdot V_Z$ addiert.

**12.** Verfahren nach einem oder mehreren der Ansprüche 1 bis 11, **dadurch gekennzeichnet, daß** einer oder mehrere der während des Ablaufs der Verfahrensschritte a) bis e) erhaltenen Meßwerte und/oder eines oder mehrere der Berechnungsergebnisse auf Datenträger gespeichert und/oder an einen vorgegebenen Ort übertragen werden.

**Claims**

**1.** A procedure for determining the proportioning of a recirculated water treatment product in open or closed cooling circuits in which losses of recirculated water are compensated by feed water, **characterized in that**:

(a) at a given time $t_0$, the numerical value $P_0$ of at least one parameter of the recirculated water is measured, the said parameter being chosen from the concentrations of selected constituents of the recirculated water which are introduced into the cooling circuit via the feed water, and the values of selected physical parameters of the recirculated water;

(b) at one or more times between the time $t_0$ and a later time $t_1$, the numerical value or values $P_z$ of the parameter or parameters measured in partial step (a) in the recirculated water are measured in the feed water, and the amount $V_z$ of the feed water supplied between the times $t_0$ and $t_1$ is measured;

(c) at the time $t_1$, the numerical value P, of the parameter or parameters measured in partial step (a) in the recirculated water is measured again in the recirculated water; and from this

(d) the effective loss $V_{loss}$ of recirculated water which has occurred in the interval between the times $t_0$ and $t_1$ is calculated according to one of equations (Ia) or (Ib):

$$V_{loss} = [(P_0 - P_1) \cdot V + P_Z \cdot V_Z] / P_0$$

(Ia)

$$V_{loss} = [(P_1^{*} - P_1) \cdot V] / P_0 \qquad \text{(Ib)}$$

V being the volume of the recirculated water at the time $t_0$;
$P_1^*$ being the value which $P_1$ would theoretically have to have if no water losses had occurred, and which is calculated according to equation (Ic):

$$P_1^{*} = (P_0 \cdot V + P_Z \cdot V_Z)/V \qquad \text{(Ic)}$$

and all volume and concentration data being based on the same unit of measurement for the volume;
and

(e) the amount M of recirculated water treatment product to be metered is calculated according to equation (II):

**10**

$$M = C_{nom} \cdot V_{loss} \qquad (II)$$

$C_{nom}$ being the preset nominal concentration of the recirculated water treatment product, and is fed into the recirculated water when $V_{loss}$ and/or M exceed a preset minimum value.

2. A procedure as claimed in claim 1 wherein the recirculated water treatment product is selected from antifoams, hardness stabilizers, dispersants, corrosion inhibitors, biocides and combinations thereof.

3. A procedure as claimed in one or both of claims 1 and 2 wherein the parameters of the recirculated water and feed water measured in partial steps (a) to (c) are selected from the electrical conductance, the acid capacity and the concentrations of sodium, potassium, calcium, magnesium, nitrate, sulfate and chloride ions.

4. A procedure as claimed in one or more of claims 1 to 3 wherein in the case where $V_{loss}$ and/or M do not exceed a preset minimum value after steps (a) to (e) of the procedure have been carried out, steps (b) to (e) of the procedure are repeated at later and later times $t_1$ until $V_{loss}$ and/or M exceed the preset minimum value.

5. A procedure as claimed in one or more of claims 1 to 3 wherein in the case where $V_{loss}$ and/or M do not exceed a preset minimum value after steps (a) to (e) of the procedure have been carried out, the numerical value of $V_{loss}$ and/or M is stored in a register, steps (a) to (e) of the procedure are repeated at later times $t_0$ and $t_1$, and the resulting numerical value of $V_{loss}$ and/or M is added to the numerical value stored in the register, until the cumulative total value of $V_{loss}$ and/or M exceeds the preset minimum value.

6. A procedure as claimed in one or more of claims 1 to 5 wherein the times $t_0$ and $t_1$ within a sequence of steps (a) to (e) of the procedure are between 5 minutes and 48 hours apart.

7. A procedure as claimed in one or more of claims 1 to 6 wherein steps (a) to (e) of the procedure are repeated periodically, each new time $t_0$ being simultaneous with or after the time $t_1$ of the previous sequence of steps (a) to (e) of the procedure.

8. A procedure as claimed in one or more of claims 1 to 7 wherein the sequence of steps (a) to (e) of the procedure is started and carried out under the control of a program.

9. A procedure as claimed in one or more of claims 1 to 7 wherein the sequence of steps (a) to (e) of the procedure is started by means of a manual instruction.

10. A procedure as claimed in one or more of claims 1 to 9 wherein the recirculated water and/or the feed water is filtered or centrifuged before the numerical value $P_0$, $P_1$ or $P_z$ of a parameter is measured.

11. A procedure as claimed in one or more of claims 1 to 10 wherein, in partial step (b), individual numerical values $P_z$ are measured in the feed water at several times between the times $t_0$ and $t_1$, and either these individual numerical values are averaged to give a mean numerical value $P_z$ and this is multiplied by the volume $V_z$ of the feed water supplied between $t_0$ and $t_1$ to give $P_z \cdot V_z$, or the product of each individual numerical value and that partial volume $V_z$ of the feed water which corresponds to each individual numerical value is calculated and the individual products are added together to give a total value $P_z \cdot V_z$.

12. A procedure as claimed in one or more of claims 1 to 11 wherein one or more of the measured values obtained during the course of steps (a) to (e) of the procedure, and/or one or more of the calculation results, are stored on data carriers and/or transferred to a given site.

**Revendications**

1. Procédé de détermination de la quantité dosée d'un produit pour le traitement de l'eau recyclée dans des circuits de refroidissement ouverts ou fermés, dans lequel on compense les pertes d'eau dans l'eau recyclée par de l'eau d'appoint,
**caractérisé en ce que**

a) à un moment prédéterminé $t_0$ on mesure la valeur numérique $P_0$ d'au moins un paramètre de l'eau recyclée, choisi parmi les concentrations de constituants choisis de l'eau recyclée, qui sont introduits par l'eau d'appoint dans le circuit de refroidissement, et les valeurs de paramètres physiques choisis de l'eau recyclée,
b) à un ou plusieurs moments compris entre le temps $t_0$ et un moment ultérieur $t_1$ on mesure dans l'eau d'appoint la ou les valeurs numériques $P_z$ du ou des paramètres mesurés dans l'étape partielle a) dans l'eau recyclée ainsi que la quantité $V_z$ d'eau d'appoint introduite entre les temps $t_0$ et $t_1$,
c) au moment $t_1$ on mesure à nouveau dans l'eau recyclée la valeur numérique $P_1$ du ou des paramètres mesurés dans l'étape partielle a) dans l'eau recyclée, et à partir de cela
d) on calcule au moment $t_1$ la perte effective $V_{perte}$ apparue dans l'intervalle de temps compris entre les moments $t_0$ et $t_1$ d'après l'une des équations (Ia) ou (Ib) :

$$V_{perte} = [(P_0 - P_1) \cdot V + P_z \cdot V_z] / P_0 \qquad \text{(Ia)}$$

$$V_{perte} = [(P_1^* - P_1) \cdot V] / P_0 \qquad \text{(Ib)}$$

dans lesquelles V représente le volume d'eau recyclée au moment to, $P_1^*$ la valeur que $P_1$ aurait dû théoriquement prendre s'il n'y avait pas eu de pertes d'eau, et que l'on calcule d'après l'équation (Ic) :

$$P_1^* = (P_0 \cdot V + P_z \cdot V_z) / V \qquad \text{(Ic)}$$

et toutes les indications de volume et de concentration se rapportent à la même unité de mesure pour le volume, et
e) on calcule la quantité M de produit à doser pour le traitement de l'eau recyclée selon l'équation (II)

$$M = C_{cons} \cdot V_{perte} \qquad \text{(II)}$$

dans laquelle $C_{cons}$ représente la concentration de consigne qu'il faut avoir pour le traitement de l'eau recyclée, et on l'ajoute à l'eau recyclée lorsque $V_{perte}$ et/ou M dépasse une valeur minimale prédéterminée.

2. Procédé selon la revendication 1,
   **caractérisé en ce que**
   le produit de traitement de l'eau recyclée est choisi parmi les antimousses, les stabilisateurs de durcissement, les dispersants, les inhibiteurs de corrosion et les agents bipcides ainsi que leurs combinaisons.

3. Procédé selon l'une des revendications 1 ou 2, ou les deux,
   **caractérisé en ce que**
   les paramètres de l'eau recyclée et de l'eau d'appoint mesurés dans les étapes partielles a) à c) sont choisis parmi la conductivité électrique, la capacité acide et les concentrations d'ions sodium, potassium, calcium, magnésium, nitrate, sulfate et chlorure.

4. Procédé selon une ou plusieurs des revendications 1 à 3,
   **caractérisé en ce qu'**
   au cas où après franchissement des étapes a) à e) du procédé $V_{perte}$ et/ou M ne dépasse pas une valeur minimum prédéterminée, on répète les étapes b) à e) du procédé jusqu'à des moments $t_1$, de plus en plus décalés dans le temps, où $V_{perte}$ et/ou M dépasse la valeur minimum prédéterminée.

5. Procédé selon une ou plusieurs des revendications 1 à 3,
   **caractérisé en ce qu'**
   au cas où après franchissement des étapes a) à e) du procédé $V_{perte}$ et/ou M ne dépasse pas une valeur minimum prédéterminée, on enregistre la valeur numérique de $V_{perte}$ et/ou de M dans une mémoire, on répète encore les étapes a) à e) du procédé à des moments $t_0$ et $t_1$ ultérieurs, et on ajoute à chaque fois la valeur numérique obtenue de $V_{perte}$ et/ou de M à la valeur numérique enregistrée dans la mémoire, aussi souvent qu'il faut pour que la valeur globale de $V_{perte}$ et/ou de M dépasse la valeur minimum prédéterminée.

6. Procédé selon une ou plusieurs des revendications 1 à 5,
   **caractérisé en ce que**
   les moments $t_0$ et $t_1$ sont distants de 5 minutes à 48 heures à l'intérieur d'une succession d'étapes a) à e) du procédé.

7. Procédé selon une ou plusieurs des revendications 1 à 6,
   **caractérisé en ce qu'**
   on répète périodiquement les étapes a) à e) du procédé, le nouveau temps to se situant à chaque fois, temporellement, au même moment que, ou après, le temps $t_1$ de la succession précédente d'étapes a) à e) du procédé.

8. Procédé selon une ou plusieurs des revendications 1 à 7,
   **caractérisé en ce qu'**
   on démarre et
   on effectue la succession des étapes a) à e) du procédé d'une manière réglée par un programme.

9. Procédé selon une ou plusieurs des revendications 1 à 7,
   **caractérisé en ce qu'**
   on démarre la succession des étapes a) à e) du procédé par une indication donnée à la main.

10. Procédé selon une ou plusieurs des revendications 1 à 9,
    **caractérisé en ce qu'**
    on filtre ou

on centrifuge l'eau recyclée et/ou l'eau d'appoint avant de mesurer la valeur numérique $P_0$, $P_1$ ou $P_z$ d'un paramètre.

**11.** Procédé selon une ou plusieurs des revendications 1 à 10,
**caractérisé en ce que**
dans l'étape partielle b) , à plusieurs moments situés entre les temps $t_0$ et $t_1$, on mesure diverses valeurs numériques $P_z$ dans l'eau d'appoint et
ou bien l'on fait la moyenne entre ces diverses valeurs numériques pour obtenir une valeur numérique moyenne $P_z$ et on la multiplie par le volume $V_z$ de l'eau d'appoint introduite entre $t_0$ et $t_1$ pour obtenir $P_z \cdot V_z$,
ou bien on calcule le produit de chaque valeur numérique par le volume partiel correspondant $V_z$ de l'eau d'appoint se rapportant à la valeur numérique en question, et l'on ajoute les divers produits pour obtenir une valeur globale $P_z \cdot V_z$.

**12.** Procédé selon une ou plusieurs des revendications 1 à 11,
**caractérisé en ce qu'**
on enregistre une ou plusieurs des valeurs mesurées au cours du déroulement des étapes a) à e) du procédé et/ou un ou plusieurs des résultats de calcul sur des supports de données, et/ou on les transfère en un endroit prédéterminé.